# EUROPÄISCHE PATENTSCHRIFT

(11) **EP 4 038 294 B1**
(45) Veröffentlichungstag und Bekanntmachung des Hinweises auf die Patenterteilung: **14.02.2024**
(21) Anmeldenummer: 20774874.0
(22) Anmeldetag: 03.09.2020
(51) Int. Cl.: F16H 57/04, F03D 80/70

(54) **PLANETENGETRIEBE EINER WINDKRAFTANLAGE**
PLANETARY TRANSMISSION OF A WIND TURBINE
TRANSMISSION PLANÉTAIRE D'ÉOLIENNE

(30) Priorität: 02.10.2019 DE 102019126551
(43) Veröffentlichungstag der Anmeldung: 10.08.2022
(73) Patentinhaber: Schaeffler Technologies AG & Co. KG, 91074 Herzogenaurach (DE)
(72) Erfinder: HEMPEL, Thomas, 97422 Schweinfurt (DE); PLOGMANN, Michael, 91074 Herzogenaurach (DE); JUNGHAEHNEL, Mario, 97447 Gerolzhofen (DE)
(86) Internationale Anmeldenummer: PCT/DE2020/100771
(87) Internationale Veröffentlichungsnummer: WO 2021/063437

(56) Entgegenhaltungen:
- EP-A1- 2 383 480
- WO-A1-2016/119788
- WO-A1-2019/120870
- DE-U- 1 985 822
- SU-A1- 1 090 941

## Beschreibung

### Technisches Gebiet

Die Erfindung bezieht sich auf Planetengetriebe von Windkraftanlagen, insbesondere auf die Gleitlagerung von Planetenrädern auf Planetenachsen von solchen Planetengetrieben.

Windkraftanlagen umfassen allgemein einen in einer Gondel angeordneten Generator zur Umsetzung der Windenergie in elektrische Energie. Dieser Generator wird von auf einem Rotor angetrieben, auf welchen Windkräfte wirken. Um die relativ geringen Drehzahlen, die von den Rotoren erzeugt werden, auf eine für die Stromerzeugung brauchbare und für den Generator geeignete Drehzahl anzuheben, haben sich Planetengetriebe durchgesetzt, die ebenfalls in der Gondel der Windkraftanlage angeordnet sind. Dazu wird die Drehzahl des mit einer Getriebeangangswelle verbundenen Rotors von dem Planetengetriebe vom Langsamen ins Schnelle übersetzt und über eine Getriebeabgangswelle dem Generator zur Verfügung gestellt.

Derartige Planetengetriebe sind allgemein so aufgebaut, dass koaxial zu einem Sonnenrand ein Hohlrad gegeben ist, wobei das Sonnenrad mit einer Außen- und das Hohlrad mit einer Innenverzahnung versehen ist. In radialem Abstand zwischen Sonnenrad und Hohlrad sind Planetenräder vorgesehen, die eine Außenverzahnung haben. Diese Außenverzahnungen der Planetenräder stehen mit den jeweiligen Verzahnungen von Hohl- und Sonnenrad in kämmendem Eingriff. Um die Planetenräder drehbar zu lagern, sind Planetenachsen vorgesehen, die die Planetenräder drehbeweglich aufnehmen und die mit einem Planetenträger drehfest verbunden sind. Neben dieser üblichen Lagerung von Planetenrädern kann auch vorgesehen sein, dass die Planetenräder drehfest mit der Planetenachsen verbunden sind und die Planetenachsen drehbeweglich im Planetenträger gelagert sind.

Üblicherweise werden solche Planetenräder auf den Planetenachsen mittels von Wälzlagern drehbar gelagert.

Neben dieser Wälzlagerung sind auch Gleitlagerungen von Planetenrädern auf Planetenachsen bekannt. So zeigt DE102013221265 A1 ein Planetengetriebe, bei welchem die jeweiligen Planetenräder zu den jeweiligen Planetenachsen in ausschließlichem Gleitkontakt stehen. Um das gegenseitige Abgleiten der beteiligten Oberflächen zu verbessern und um entstehende Wärme abzuführen, wird ein Schmierstofffilm zwischen den beteiligten Oberflächen erzeugt, in dem ein Schmierstofftauchbad vorgesehen ist, welches die Planetenräder bei ihrer Drehung um das Sonnenrad durchlaufen.

Neben dieser Tauchbadschmierung sind auch Gleitlagerungen bekannt, bei welchen der Schmierstoff direkt zwischen die in Gleitkontakt stehenden Gleitflächen eingebracht wird.

Die DE 19 85 822 U offenbart ein Planetengetriebe einer Windkraftanlage, auf dessen Planetenachsen die Planetenräder gleitgelagert sind und eine Kavität an einer Oberfläche einer der beiden in Gleitkontakt stehenden Gleitpartner ausgebildet ist. Hierbei dient die spezielle Ölführung dem Zweck, bei hohen Drehmomenten am Planetenradträger und hohen Planetenrad-Drehzahlen zum einen eine ausreichende Schmierung des Gleitlagers, zum anderen die benötigte Ölmenge zur Kühlung der Lagerung bereitzustellen.

Eine weitere Möglichkeit der Schmierung ist aus DE 2702321 A1 bekannt, wo in einer der beteiligten Gleitflächen Kavitäten eingebracht sind, in denen Mündungen einer Schmierstoffversorgungseinrichtung unmittelbar enden. Das mündungsferne Ende der Schmierstoffversorgungseinrichtung steht mit einer Pumpe in Wirkzusammenhang, welche Schmierstoff in die Schmierstoffversorgungseinrichtung pumpt, welcher dann an den Mündungen austritt und die Kavitäten befüllt.

Die stete Befüllung dieser Kavitäten mit einer ausreichenden Schmierstoffmenge stellt sicher, dass sich während der Drehung der beteiligten Gleitpartner Schmierstoff in der Lastzone dieses Gleitlagers gelangt, welcher unter dem dort herrschenden hydrodynamischen Druckverhältnisse einen die beiden Gleitpartner trennenden Schmierfilm ausbildet. Diese Befüllung der Kavitäten lässt sich sicherlich auch dadurch bewirken, dass eine Pumpe Schmierstoff mit hohem Druck in die Schmierstoffversorgungseinrichtung einbringt, welche die unweigerlich auftretenden Schmierstoffverluste ausgleicht. Dies ist allerdings unerwünscht, weil derart hohe Pumpdrücke unweigerlich auch die Menge des aus dem Gleitlager austretenden Schmierstoffs erhöht. Will man übermäßig aus dem Gleitlager austretenden Schmierstoff vermeiden, kann eine ausreichend gute Füllung der Kavitäten auch dadurch bewirkt werden, dass bei niedrigem Pumpendruck große Volumina an Schmierstoff in die Kavitäten eingebracht werden. Dies erfordert allerdings entsprechend eine Schmierstoffverteilungseinrichtung mit großem Querschnitt, indem die Schmierstoffverteilungseinrichtung entweder eine Vielzahl von im Querschnitt kleinen oder einige im Querschnitt großen Kanälen aufweist. Da allerdings die Kanäle der Schmierstoffverteilungseinrichtung zur Versorgung der Kavitäten des Gleitlagers durch zumindest einen der Gleitpartner geführt sind, führten derartige Kanäle zu einer Schwächung des entsprechenden Gleitpartners. Will man diese Schwächung des Gleitpartners ausgleichen, so dass dieser zur Übertragung großer Belastungen ertüchtigt bleibt, kann dies nur dadurch bewirkt werden, dass der entsprechende Gleitpartner bzw. das gesamte Gleitlager größer ausgelegt wird. Eine solch größere Auslegung führt neben der Bauraumerfordernis zwangläufig auch zu einem größeren Gewicht, was bei einer Windkraftanlage wegen der Unterbringung solcher Planetengetriebe in der Gondel unerwünscht ist.

Daher liegt der Erfindung die Aufgabe zugrunde, ein Planetengetriebe für eine Windkraftanlage anzugeben, dessen Planetenräder auf Planetenachsen eine verbesserte, die vorstehenden Nachteile ausschließende Gleitlagerung haben.

### Darstellung der Erfindung

Diese Aufgabe wird durch die in Anspruch1 angegebenen Merkmale gelöst. Vorteilhafte Aus- und Weiterbildungen der Erfindung sind den abhängigen Ansprüchen entnehmbar.

Eine stets ausreichende Befüllung des Gleitlagers mit Schmierstoff bei niedrigem Pumpendruck ist dann gegeben, wenn jede an einer Oberfläche eines der beiden in Gleitkontakt stehenden Gleitpartner vorgesehene Kavität eine Schmierstofftasche ist, deren axiale Länge L mindestens 60% der axialen Breite B des Planetenrads beträgt, eine Umfangsnut vorgesehen ist, die vollumfänglich in dem Gleitpartner verläuft, der koaxial zu dem mit zumindest einer solchen Schmierstofftasche versehenen anderen Gleitpartner angeordnet ist, und/oder die sich in dem mit der zumindest mit einer Schmierstofftasche versehenen Gleitpartner an dessen Umfang ausschließlich zwischen der oder den Schmierstofftaschen erstreckt, und
dass die Schmierstoffverteilungseinrichtung zweite Mündungen umfasst, die entweder in oder gegenüber von Umfangsnuten enden.

Dem liegt die Erkenntnis zugrunde, dass durch das Vorsehen von Umfangsnuten ein mit geringem Pumpendruck über ein oder zwei Radialkanäle befüllbares Schmierstoffreservoir im Gleitlager selbst geschaffen wird, aus welchem dann dort aufgenommener Schmierstoff in die Schmierstofftaschen nachläuft und für eine genügende Füllung dieser Schmierstofftaschen mit Schmierstoff sorgt, selbst wenn zu einer guten Trennung der beiden Gleitpartner im Lastbereich des Gleitlagers die erste axiale Länge L1 der Schmierstofftaschen größer/gleich 60% der axialen Breite B des Planetenrads ist. Zudem ist die axiale Verbindung der jeweilige Schmierstofftasche oder Schmierstofftaschen mit der Umfangsnut mit gleicher zweiten radialen Einsenktiefe T2 ausgebildet. Durch Fortsetzungen der jeweiligen Schmierstofftaschen an ihren axialen Enden, die gegenüber der Ausdehnung dieser Schmierstofftasche in Umfangsrichtung B5 und der ersten radialen Einsenktiefe T1 zumindest in Umfangsrichtung eine reduzierte Ausdehnung B4 haben, werden bei Schränkung der Planetenräder auf den Planetenachsen Kantenläufer am Gleitlager vermieden.

Die Montage ist vereinfacht, wenn die axiale Breite B1 der Umfangsnut größer dem Durchmesser D der zweiten Mündungen und kleiner der ersten axialen Länge L1 der zumindest einen Schmierstofftasche ist, weil durch die größere Breite B1 der Umfangsnut auch bei toleranzbedingter Fehlausrichtung der beiden Gleitpartner die zweiten Mündungen immer vollständig in der jeweiligen Umfangsnut enden, also deren Durchmesser D nicht etwa durch eine Fehlausrichtung überdeckt wird.

Vorteilhaft zur Ausbildung eines Schmierstofffilms in der Lastzone LZ des Gleitlagers ist es, wenn die axiale Symmetrieachse jeder Schmierstofftasche zum Zentrum der Lastzone LZ der beiden im Gleitkontakt stehenden Gleitpartner einen Winkel α zwischen 90° und 120°einhält.

Die Herstellung von Planetengetrieben bzw. die Ausbildung von Gleitlagern an Planetenrädern und Planetenachsen ist im Handling vereinfacht, wenn im Gegensatz zu großen und schweren Planetenrädern oder Planetenachsen Hülsen vorgesehen sind, deren erste Mantelflächen entweder mit der Innenbohrung des Planetenrades oder dem Außenumfang der Planetenachse drehfest verbunden und von radialen Durchbrüchen durchzogen sind, und deren zweite Mantelfläche, welche sich in radialem Abstand zur ersten Mantelfläche erstreckt, die Oberfläche ist, die mit der Oberfläche des jeweils anderen Gleitpartners in Gleitkontakt steht.
den ersten Mantelflächen gegenüberliegenden Mantelflächen die Oberflächen bilden, die mit den Oberflächen der anderen Gleitpartner in Gleitkontakt stehen.

Die Ausrichtung von Hülsen am Planetenrad oder der Planetenachse ist vereinfacht, wenn die Schmierstoffverteilungseinrichtung Radialkanäle umfasst, die sich in einem der Gleitpartner erstrecken, umlaufende Rinnen vorgesehen sind, die entweder an der ersten Mantelfläche der Hülse oder einer Umfangsfläche von Planetenrad oder Planetenachse liegt, mit der die Hülse drehfest verbunden ist, und
wenn die Radialkanäle, deren axiale Breite gegenüber der axialen Breite der umlaufenden Rinnen geringer ist, in die jeweiligen Rinnen münden, weil durch die axial breiteren Rinnen auch eine geringe axiale Fehlausrichtung von Hülse zum Planetenrad bzw. zur Planetenachse den Schmierstoffdurchfluss nicht behindert.

Der Axialanlauf ist verbessert, wenn an den Planetenrädern oder dem Planetenträger Axialscheiben vorgesehen sind, von denen jeweils ein Ringrand mit einem axialen Gleitpartner in axialem Gleitkontakt steht.

Eine gute Verschleißfestigkeit des Gleitlagers ist dann gegeben, wenn die Oberfläche des einen Gleitpartners gegenüber der Oberfläche des jeweils anderen Gleitpartners eine größere Härte aufweist.

Gute Gleiteigenschaften bei geringem Verschließ bei einfacher Herstellung stellen sich dann ein, wenn die geringe Härte der Oberfläche des einen Gleitpartners eine reine Stahlhärte ist und wenn die größere Härte der Oberfläche des jeweils anderen Gleitpartners von einer Beschichtung aus Hartstoff gebildet ist.

### Kurze Beschreibung der Figuren

Es zeigen:
- Fig. 1: eine erste Ausbildungsform eines Planetengetriebes einer Windkraftanlage;
- Fig. 2: eine zweite Ausbildungsform gemäß Fig. 1;
- Fig. 3: eine dritte Ausbildungsform gemäß Fig. 1;
- Fig. 4: eine vierte Ausbildungsform gemäß Fig. 1;
- Fig. 5: eine Ansicht einer Windkraftanlage;
- Fig. 6a und b: zwei Schnitte durch eine Planetenachse und
- Fig. 7a und b: eine andere Ausführung einer Hülse

### Wege zum Ausführen der Erfindung

Die Erfindung soll nun anhand der Figuren näher erläutert werden.

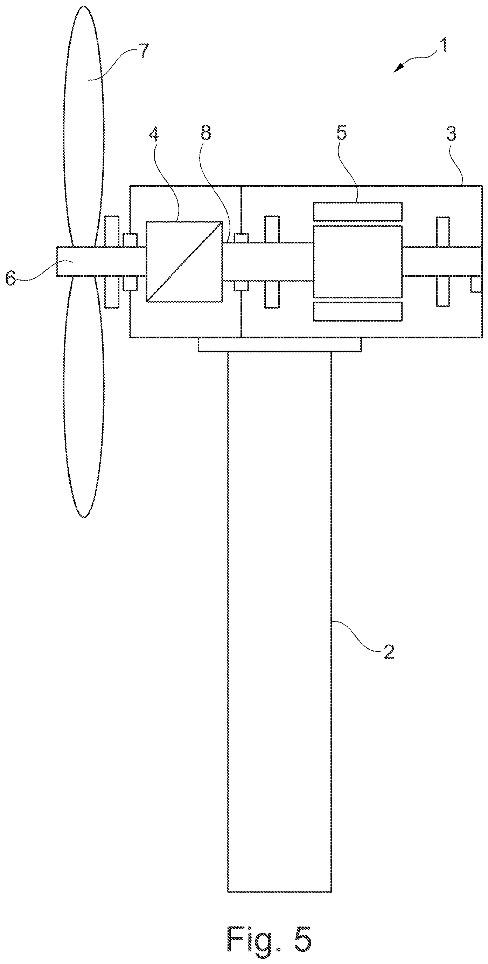

In Fig. 5 ist eine Windkraftanlage 1 schematisch gezeigt, welche in einer, auf einem Turm 2 angebrachten Gondel 3 u.a. ein Planetengetriebe 4 und einen Generator 5 aufnimmt. Ferner ist ein mit einer Getriebeeingangswelle 6 verbundener Rotor 7 gegeben. Wird dieser Rotor 7 von auftreffendem Wind angeströmt, wird die Getriebeeingangswelle 6 in Drehung versetzt und die Drehzahl der Getriebeeingangswelle 6 mittels der Planetengetriebes 4 vom Langsamen ins Schnellere übersetzt und über eine Getriebeausgangswelle 8 an den Generator 5 abgegeben.

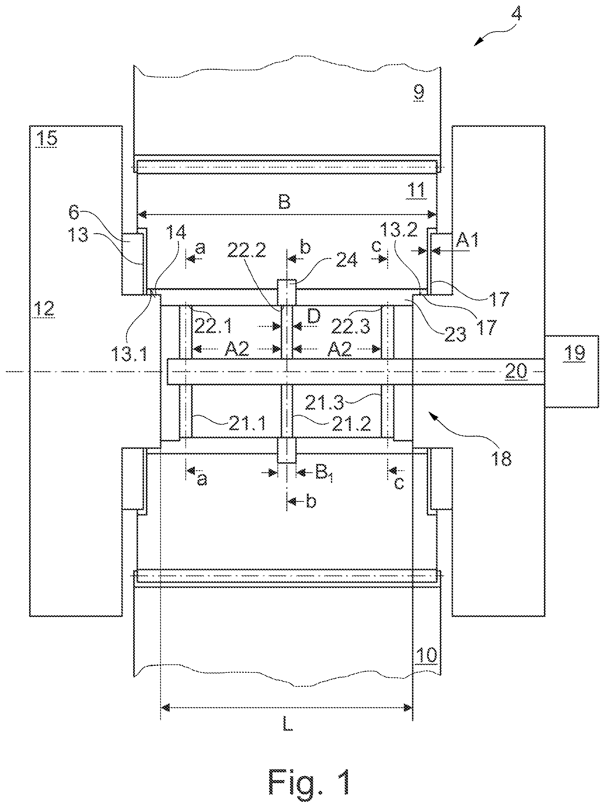

In Fig. 1 ist eine erste Ausführungsform eines Planetengetriebes 4 einer Windkraftanlage 1 gezeigt. Dieses Planetengetriebe 4 wird von einem Hohlrad 9 und einem Sonnenrad 10 gebildet, wobei das Sonnenrad 10 und Hohlrad 9 koaxial zueinander angeordnet sind. Im radialen Abstand zwischen Hohlrad 9 und Sonnenrad 10 sind Planetenräder 11 angeordnet, wovon in den Fig. 1 bis 4 lediglich ein Planetenrad 11 sichtbar ist. Die Außenverzahnung (nicht bezeichnet) der Planetenräder 11 steht mit der Außenverzahnung (nicht bezeichnet) des Sonnenrades 9 und der Innenverzahnung (nicht bezeichnet) des Hohlrades 10 im Eingriff. Die jeweiligen Planetenräder 11 sind auf einer Planetenachse 12 drehbar angeordnet. Durch die koaxiale Anordnung der jeweiligen Planetenräder 11 auf den jeweiligen Planetenachsen 12 wird zwischen der inneren Oberfläche 13.1 des Gleitpartners Planetenrad 11 und der äußeren Oberfläche 13.2 der Planetenachse 12 als dem anderen Gleitpartner ein Gleitlager gebildet. Ist das Planetengetriebe 4 montiert, ergibt sich zwischen den Oberflächen 13.1, 13.2 der in Fig. 1 beteiligten Gleitpartner 11, 12 ein schmaler Ringspalt 14, der zur besseren Darstellung der Verhältnisse in den Fig. 1, 2-4 und 7 übertrieben groß dargestellt ist.

Wie der Fig. 1 entnehmbar ist, sind die Planetenachsen 12 mit einem Planetenträger 15 drehfest verbunden.

Außerdem sind auf der Planetenachse 12 zwei Axialscheiben 16 vorgesehen, die jeweils zwischen dem Planetenträger 15 und Planetenrad 11 angeordnet und mit dem Planetenträger 15 verbunden sind, zu den Planetenrädern 11 einen geringen Axialabstand A1 einhalten und zusammen mit dem Planetenrad 11 ein Axialgleitlager bilden, indem die Ringränder 33 der Axialscheiben 16 mit dem Planetenrädern 11 in axialem Gleitkontakt stehen. Nur der Vollständigkeit halber sei darauf hingewiesen, dass in einem anderen, nicht dargestellten Ausführungsbeispiel die Axialscheiben 16 auch mit dem Planetenrad 11 verbunden sein können, wobei dann der Planetenträger 15 den anderen axialen Gleitpartner bildet.

Zur Verbesserung der Gleitfähigkeit und der Langzeitstabilität von Planetenachse 12 und Planetenräder 11, welche beide aus Stahl gebildet sind, ist vorgesehen, dass eine Oberfläche 13.1; 13.2 eines der beiden Gleitpartner 11; 12 lediglich gehärtet ist, also eine bloße Stahlhärte hat, und dass die Oberfläche 13.1; 13.2 des anderen Gleitpartners 11; 12 zusätzlich mit einer Beschichtung 17 aus Hartstoff beschichtet ist, welche gegenüber der Stahlhärte der anderen Oberfläche 13.1; 13.2 eine höhere Härte aufweist. Insbesondere kann diese Hartstoffbeschichtung als eine oxidische, nitridische, oxynitridische oder karbidische Beschichtung 17 ausgebildet sein. Insbesondere enthält diese Hartstoffschicht in einer ersten bevorzugten Ausführungsform eines der Elemente Titan, Aluminium, Chrom und Molybdän. Vorzugsweise ist die Hartstoffschicht gebildet aus mindestens einem Material der Gruppe umfassend TiN, TiCN, AL2O3, TiAIN, CrN, AlCrN, MoN. In einer weiteren bevorzugten Ausführungsform ist die erste Schicht als eine amorphe Kohlenstoffschicht oder eine Diamantschicht ausgebildet. Im in Fig. 1 gezeigten Ausführungsbeispiel ist die äußere Oberfläche 13.1 der aus Stahl gebildeten Planetenachse 12 mit einer Beschichtung 17 aus Triondur CX⁺ beschichtet, welche eine bekannte DLC-Beschichtung der Anmelderin ist und welche eine Schichthärte von größer/gleich 1000 HV hat. Diese beschichtete Oberfläche 13.2 der Planetenachse 12 steht in direktem Gleitkontakt mit den inneren Oberflächen 13.1 der Planetenräder 11, welche lediglich eine der Stahlhärte von 55 bis 62 HRC entsprechende Oberflächenhärte haben. Nur der Vollständigkeit halber sei darauf hingewiesen, dass die Ausführung der Erfindung nicht notwendig auf eine Beschichtung 17 der Oberfläche 13.2 des stehenden Bauteils, nämlich der Planetenachse 12, festgeschrieben ist. Vielmehr kann in einem anderen Ausführungsbeispiel die Oberfläche 13.2 der Planetenachse 12 auch nur eine Stahlhärte ausweisen und die Oberfläche 13.1 des Planetenrades 11 zur Erzielung einer gegenüber der Stahlhärte der Oberfläche 13.2 der Planetenachse 12 größeren Härte mit einer der vorgenannten Beschichtung 17 beschichtet sein.

Was im Zusammenhang für das Radialgleitlager zwischen Planetenrad 11 und Planetenachse 12 im letzten Absatz erläutert wurde, gilt natürlich sinngemäß auch für die Axialgleitlager zwischen den Planetenträgern 15 und Axialscheiben 16 bzw. zwischen Axialscheiben 16 und Planetenrad 11. Daher sind in Fig. 1 auch die Axialscheiben 16 an ihren den Planetenrädern 11 zugewandten Seite mit einer Beschichtung 17 aus Hartstoff versehen.

Bei dem in Fig. 1 gezeigten Radialgleitlager und den Axialgleitlagern handelt es sich um ein hydrodynamisches Gleitlager. Derartige hydrodynamische Gleitlagerungen basieren auf dem Gedanken, dass sich ein ausreichend hoher, die beiden Gleitpartner 11, 12 trennender Schmiermitteldruck selbstständig an der Stelle des Lagers ausbildet, wo die Kraftübertragung zwischen den beiden Gleitpartnern 11, 12 erfolgt. Da ebenso wie bei Wälzlagern auch bei Gleitlagern die Kraftübertragung in der Lastzone LZ dieses Gleitlagers erfolgt, also dem Ort, an welchen die von einem der Gleitpartner aufgenommenen Lasten versuchen, sich am anderen Gleitpartner abzustützen, wird im Bereich der Lastzone LZ der Ringspalt 14 quasi keilförmig verengt, sodass außerhalb dieser keilförmigen Verengung im Ringspalt 14 vorhandener Schmierstoff durch die Rotation des einen Gleitpartners 11; 12 gegenüber dem anderen Gleitpartner 12; 11 Schmierstoff in die Verengung eingezogen wird, wodurch sich dort ein Schmierfilm mit ausreichend hohem, die beiden Gleitpartner 11, 12 trennenden Schmierstoffdruck einstellt.

Um eine ausreichende Füllung des Ringspalts 14 mit Schmierstoff zu gewährleisten, ist eine Schmierstoffverteilungseinrichtung 18 vorgesehen, die von einer Pumpe 19 gespeist wird. Im Einzelnen ist dies gemäß Fig. 1 so realisiert, dass die Pumpe 19 unter geringem Druck, der unter 5 bar liegt, Schmierstoff in einen in der Planentenachse 12 verlaufenden Axialkanal 20 fördert. An diesen Axialkanal 20 schließen in drei Gruppen angeordnete Radialkanäle 21.1 - 3 an, wobei die Radialkanäle 21.1 - 3, die zu einer Gruppe gehören, zu den Radialkanälen 21.1 - 3 jeder anderen Gruppe einen axialen Abstand A 2 entlang der Planetenachse 12 einhalten und einen Durchmesser D haben. Außerdem sind die Radialkanäle 21.1 - 3 in Richtung des Ringspalts 14 offen, indem diese erste und zweite Mündungen 22.1, 22.2 haben. Diese -offenen-Mündungen 22.1, 22.2 stellen sicher, dass von außerhalb des Gleitlagers geförderter Schmierstoff letztlich bis in den Ringspalt 14 gelangt.

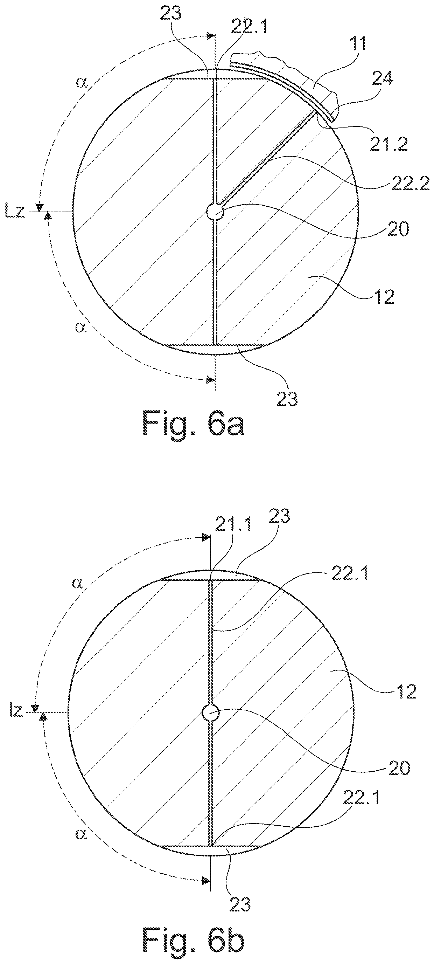

Wie der Fig. 1 und den Fig. 6a und b, welche Schnitte bb; aa und cc gemäß Fig.1 zum Gegenstand haben, unschwer entnommen werden kann, sind in die Oberfläche 13.2 der Planetenachse 12 zwei Kavitäten in der Form von Schmierstofftaschen 23 eingebacht, deren jeweilige axiale Länge L in diesem Ausführungsbeispiel etwa 90% der Breite B des Planetenrads 11 entspricht und somit geeignet sind, während des Betriebs dieses Gleitlagers nahezu im gesamten Bereich, in dem die Planetenräder 12 die Planetenachsen 11 überdecken, auch bei geringen Pumpendruck einen hydrodynamischen Zustand zwischen den beiden Gleitpartnern 11, 12 zu erzeugen.

Diese Schmierstofftaschen 23 wurden dadurch gebildet, dass etwa durch Einfräsen Planflächen in die ursprünglich runde Mantelkontur der Planetenachse 12 eingebracht wurden. Wie den Fig. 6a und b entnehmbar ist, halten axialen Symmetrieachsen jeder der beiden Schmierstofftaschen 23 in dem in Fig. 1 gezeigten Ausführungsbeispiel jeweils einen Winkel α von 90° zur Mitte der Lastzone LZ ein, welcher in einem anderen -nicht gezeigten- Ausführungsbeispiel bis auf 120° ansteigen kann, um die hydrodynamische Effekte des jeweiligen Gleitlagers zu optimieren.

Wie die Fig. 1, 6a und 6b offenbaren, werden die Gleiteigenschaften des in Fig. 1 gezeigten Gleitlagers im Wesentlichen über eine ausreichende Füllung der Schmierstofftaschen 23 mit Schmierstoff bewirkt, weil diese dafür sorgt, dass unter Relativbewegung der beiden Gleitpartnern zueinander immer eine ausreichende große Schmierstoffmenge in die Lastzone LZ dieses Gleitlagers gefördert wird, um mittels dort entstehenden hydrodynamischen Druck die beiden Gleitpartner voneinander zu trennen. Da allerdings während des Betriebs von hydrodynamischen Gleitlagern aus dem Gleitlager austretender Schmierstoff unvermeidbar ist, sind erste und zweite Mündungen 22.1, 22.2 vorgesehen, aus welchen von der Pumpe 19 über die Kanäle 20, 21 geförderter Schmierstoff austritt und die entstehenden Verluste ausgleicht. Wie den Darstellungen gemäß Fig. 6b, welche einen Schnitt aa oder cc gemäß Fig.1 zum Gegenstand hat, leicht entnommen werden kann, enden die ersten Mündungen 22.1 unmittelbar in den Schmierstofftaschen 23. Die zweiten Mündungen 22.2 hingegen stehen lediglich in einem mittelbaren Kontakt zu den Schmierstofftaschen 23, indem sie gegenüber einer Umfangsnut 24, die gegenüber dem Durchmesser D der Radialkanäle 22.1 eine etwas größere axiale Breite B1 hat und die in das Planetenrad 11 beispielsweise durch Drehen in deren Oberfläche 13.1 eingebracht worden ist, münden und somit von der Pumpe 19 geförderter Schmierstoff zunächst in die Umfangsnut 24 gelangt und dann im Überdeckungsbereich zwischen Schmierstofftasche 23 und Umfangsnut 24 in die Schmierstofftaschen 23 einströmt. Dabei kommt die eher tangentiale Befüllung der Schmierstofftaschen 23 durch die zweiten Mündungen 22.2 und die Umfangsnut 24 überragende Bedeutung zu, weil über die Umfangsnut 24 stets eine ausreichende Schmierstoffmenge im Gleitlager selbst bevorratet wird, die geeignet ist, Minderfüllungen an Schmierstoff in den Schmierstofftaschen 23 durch Nachfließen in die Schmierstofftaschen 23 auszugleichen, selbst wenn ein Pumpendruck kurzzeitig mal nicht zur Verfügung steht. Derartige Minderfüllungen könnte man sicherlich auch durch Radialkanäle 21 ausgleichen, die nur erste, ausschließlich in den Schmierstofftaschen 23 endende Mündungen 22.1 aufweisen. Dies hätte allerdings den Nachteil, dass zur Bereitstellung eines ausreichend großen und schnell nachfließenden Schmierstoffvolumens eine Vielzahl von dünnen Radialkanälen 21 oder wenige dicke Radialkanäle 21 bereitgestellt werden müssen, was dann allerdings durch die vielen oder dicken Radialkanäle 21 zu einer Schwächung der Planetenachse 12 führt, die dann zur Kompensation der Festigkeitsminderung zwangsläufig eine -im Bereich von Windkraftanlagen- unerwünschte, weil größere und schwerere Planetenachsen 12 bzw. Planetengetriebe 4 erfordernde Realisierung nach sich zieht. Diese überragende Wirkung des Zusammenspiels von zweiten Mündungen 22.2 und Umfangsnut 24 für die Füllung der Schmierstofftaschen 23 mit Schmierstoff kann sogar dazu führen, dass in einem anderen, nicht dargestellten Ausführungsbeispiel gänzlich auf Radialkanäle 21.1 bzw. 21.3 mit in Schmierstofftaschen 23 unmittelbar endenden erste Mündungen 22.1, 22.3 verzichtet werden kann und die Befüllung der Schmierstofftaschen 23 ausschließlich über in der Umfangsnut 24 stehenden und über zweite Mündungen 23.2 nachgeförderten Schmierstoff erfolgt.

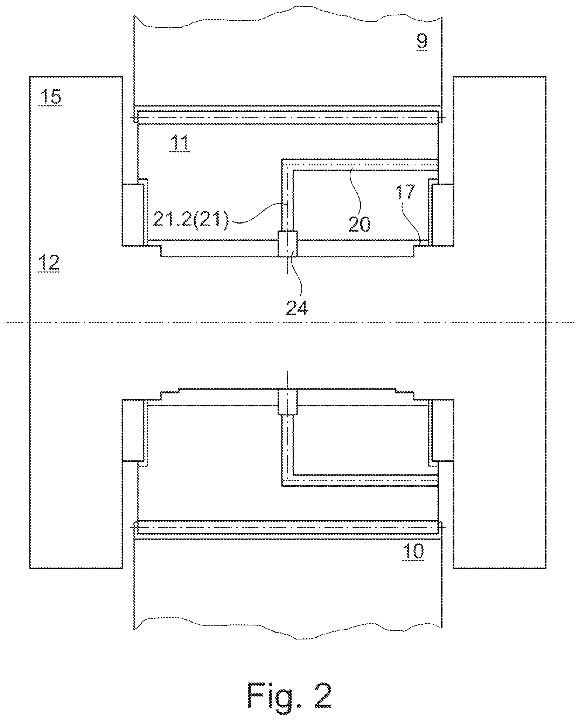

Das Ausführungsbeispiel gemäß Fig. 2 unterscheidet sich von dem Ausführungsbeispiel gemäß Fig. 1 dadurch, dass die Kanäle 20, 21 im Planetenrad 11 verlaufe, wobei allerdings nur ein Radialkanal 21.2 vorgesehen ist, der in die Umfangsnut 24 am Planetenrad 11 einmündet.

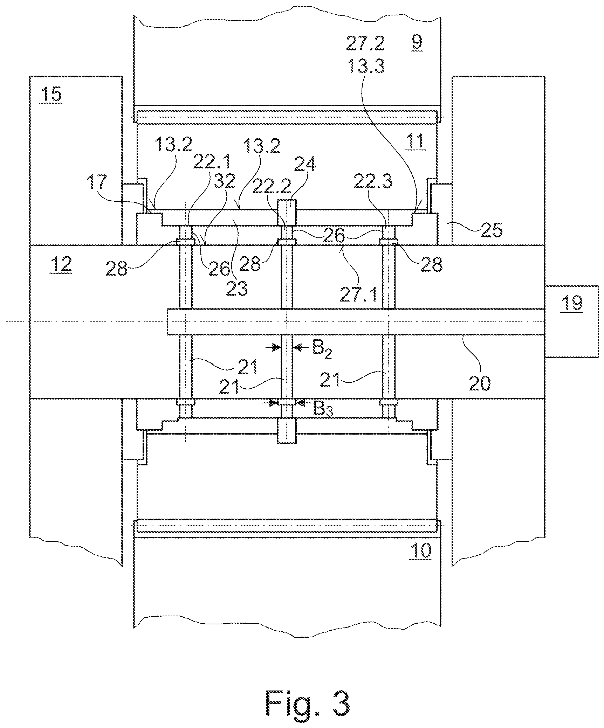

Im Unterschied zur Ausführungsform gemäß Fig.1 ist bei der Ausführung gemäß Fig. 3 eine Hülse 25 vorgesehen, deren erste Mantelfläche 27.1 mit der äußeren Umfangsfläche 32 der Planetenachse 12 drehfest verbunden ist. Dementsprechend bildet die zweite Mantelfläche 27.2 der Hülse 25, die einen Abstand X zur ersten Mantelfläche 27.1 einhält, den Gleitpartner der Planetenachse 12, der mit dem Planetenrad 12 als dem anderen Gleitpartner in Gleitkontakt steht. Nur der Vollständigkeit halber sei erwähnt, dass die zweite Mantelfläche 27.2 der Hülse 25 als die mit dem Planetenrad 11 im Gleitkontakt stehende Oberfläche 13.3 ebenfalls mit einer Beschichtung 17 aus Hartstoff versehen ist und daher gegenüber der Oberfläche 13.2 des Planetenrades 11, welche nur eine Stahlhärte hat, eine größere Härte aufweist. Ebenso wie die Planetenachse 12 gemäß Fig. 1 ist auch die Planetenachse 12 gemäß Fig. 3 von Kanälen 20, 21 durchdrungen. Fluchtend zu den Radialkanälen 21 in der Planetenachse 12 setzen sich in Fig. 3 die Radialkanäle 21 als radiale, rohrförmige Durchbrüche 26 in der Hülse 25 fort, wobei allerdings nicht die Radialkanäle 21, sondern die radialen Durchbrüche 26 mit den entsprechenden Mündungen 22.1, 22.2 versehen sind und daher die ersten Mündungen 22.1 unmittelbar in den in der Hülse 25 eingelassenen Schmierstofftaschen 23 eingebracht sind bzw. dort enden und die zweiten Mündungen 22.2 gegenüber einer im Planetenrad 11 belassenen Umfangsnut 24 aus der Hülse 25 austreten. Ferner sind an der ersten Mantelfläche 27.1 der Hülse 25 umlaufende Rinnen 28 gegeben, an die die radialen Durchbrüche 26 in der Hülse 25 anschließen. Diese Rinnen 28 erleichtern die Montage der Hülse 25 auf der Planetenachse 12, weil dazu entgegen der Darstellung gemäß Fig. 3 die radialen Durchbrüche 26 und die Radialkanäle 21 nicht notwendig in Umfangsrichtung fluchten müssen, um einen sicheren Schmierstoffdurchfluss durch die Hülse 25 zu gewährleisten. Auch müssen die Rinnen 28 und die Radialkanäle 21 beim Zusammenbau nicht genau axial fluchten, weil die Rinnen 28 gegenüber der axialen Breite B2 der Radialkanäle 21 eine größere axiale Breite B3 haben. Auch wenn gemäß der Ausführung gemäß Fig. 3 die Rinnen 28 an der Hülse 25 vorgesehen sind, ergeben sich die gleichen Vorteile natürlich auch dann, wenn die Rinnen 28 direkt in der Planetenachse 12, also dort, wo die Radialkanäle 21 enden, vorgesehen werden.

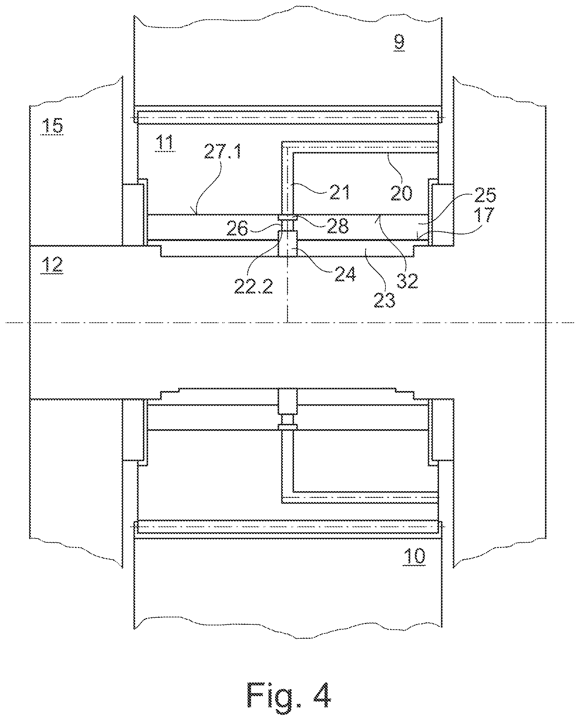

Fig. 4 zeigt für eine Ausführungsform gemäß Fig. 2 eine Hülsenlösung. Dementsprechend ist abweichend von der Ausführung nach Fig. 3 die Hülse 25 mit einer ersten Mantelfläche 27.1 mit der inneren Umfangsfläche 32 des Planetenrades 11 drehfest verbunden. Auch setzt sich die im Planetenrad 11 verlaufende Radialkanäle 21 in der Hülse 25 als radialer Durchbruch 26 fort, wobei auch hier eine Rinne 28 in der Hülse 25 vorgesehen, um in der schon beschriebenen Weise ein Ausrichten der Hülse 25 in diesem Fall am Planetenrad 11 zu erleichtern. Durch die Verwendung einer Hülse 25 ist die Umfangsnut 2, in welcher der radiale Durchbruch 26 mündet, auch nicht wie bei der Ausführungsform gemäß Fig. 2 in das Planetenrad 11, sondern die Hülse 25 eingebracht. Abweichend zu der Ausführungsform gemäß Fig.2 ist bei der Ausführungsform gemäß Fig. die Planetenachse 12, sondern die Hülse 25 mit einer der Beschichtung 17 aus Hartstoff versehen.

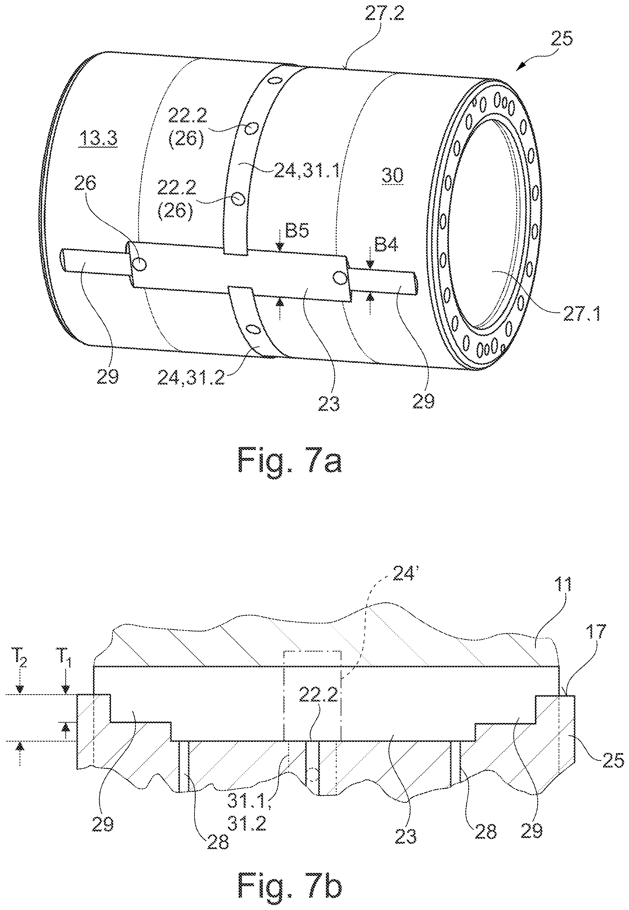

In den bisherigen Ausführungsbeispielen wurde davon ausgegangen, dass die jeweilige Schmierstofftasche 23 von einer einzigen Planfläche gebildet wird, die in die runde Kontur des jeweiligen Gleitpartners abgesenkt ist. Abweichend zu der in Fig. 3 gezeigten Hülse 25 ist in Fig. 7a und b eine Ausführungsform einer Hülse 25 gezeigt, bei welcher an den axialen Enden der jeweiligen Schmierstofftasche 23 diese in axialer Richtung verlängernde Fortsetzungen 29 anschließen. Die Breite B4 dieser Fortsetzungen 29 in Umfangsrichtung ist, wie die Fig. 7a deutlich zeigt, gegenüber der Breite B5 der Schmierstofftasche 23 in Umfangsrichtung etwas zurückgenommen. Diese Rücknahme stellt sicher, dass beim unvermeidlichen Schränken der jeweiligen Gleitpartner Kantenläufer ausgeschlossen werden, die sonst die Folge wären, wenn die Fortsetzungen 29 eine der Schmierstofftasche 23 entsprechende Breite B5 hätten. Auch wenn der Schnitt Fig. 7b zeigt, dass die Fortsetzungen 29 mit einer ersten radialen Einsenktiefe T1 gegenüber der zweiten radialen Einsenktiefe T2 der Schmierstofftasche 23 eine verminderte erste Einsenktiefe T1 haben, können die Fortsetzungen 29 zur Erhöhung des Schmierstoffvolumens selbstverständlich in einem anderen - nicht gezeigten- Ausführungsbeispiel auch die gleiche zweite Einsenktiefe T2 wie die Schmierstofftasche 23 haben.

Auch unterscheidet sich die exemplarisch anhand einer Hülse 25 gezeigte Ausführungsform gemäß Fig. 7a und b von den bisherigen Ausführungsformen dadurch, dass die Umfangsnut 24 nicht in dem Gleitpartner ausgebildet ist, der der frei von Schmierstofftaschen 23 ist, sondern sich in dem mit zumindest einer Schmierstofftasche 23 versehenen Gleitpartner an dessen Umfang ausschließlich zwischen der oder den Schmierstofftaschen 23 erstreckt. Da die in Fig. 7a gezeigte Hülse 25 entsprechend der Darstellung gemäß den Fig. 6a und b mit zwei einander gegenüberliegen Schmierstofftaschen 23 versehen ist, gibt es in der Ausführungsform gemäß Fig. 7a und b auch eine aus zwei Teilabschnitten 31.1, 31.2 gebildete Umfangsnut 24. Diese Teilabschnitte 31.1, 31.2 erstrecken sich ausschließlich zwischen den jeweiligen Schmierstofftaschen 23 am Umfangsrand 30 der Hülse 25 entlang, bevor sie in den gegebenen Schmierstofftaschen 23 münden und daher einen tangentialen Schmiermittelnachfluss in die Schmiermitteltaschen 23 sicherstellen. Weil die Hülse 25 gemäß Fig. 7a und b eine solche ist, die entsprechend der Ausführungsform gemäß Fig. 3 mit einer in Fig. 7a und b nicht gezeigten Planetenachse 12 verbunden ist, wird -wie der Darstellstellung gemäß Fig. 7b entnehmbar ist- in der Ausführungsform gemäß Fig. 7a und b diese Hülse 25 auch von radialen Durchbrüchen 26 durchdrungen. Im Unterschied zur Ausführungsform gemäß Fig. 3 enden in der Ausführungsform gemäß Fig. 7a und b die radialen Verlängerungen 26 mit ihren -zweiten- Mündungen 22. 2 daher auch nicht wie in Fig. 3 an der zweiten Mantelfläche 27.2 der Hülsen 25, sondern in den Teilabschnitten 31.1, 31.2 der Umfangsnut 24. Sofern das durch die Teilabschnitte 31.1, 31.2 gebildete Schmierstoffreservoir noch nicht geeignet sein sollte, genügend Schmierstoff für den Nachfluss in die Schmierstofftaschen 23 zur Verfügung zu stellen, kann in dem gemäß Fig. 7b gezeigten, die Hülse 25 umgebenden Planetenrad 11 auch eine den Teilabschnitten 31.1, 31.2 gegenüberliegende, weitere Umfangsnut 24' vorgesehen sein. Da diese weitere Umfangsnut 24' nur bedarfsweise vorzusehen ist, wurde diese auch nur strichpunktiert dargestellt. Auch sei der Vollständigkeit halber darauf hingewiesen, dass die in den Fig. 7a und b gezeigten vielen zweiten Mündungen 22.2 nur beispielhaft sind und in einem anderen -nicht gezeigten-Ausführungsbeispiel auch auf ein oder zwei solcher zweiten Mündungen 22.2 beschränkt sein kann.

### Bezugszeichenliste

- 1: Windkraftanlage
- 2: Turm
- 3: Gondel

- 4: Planetengetriebe
- 5: Generator
- 6: Getriebeeingangswelle
- 7: Rotor
- 8: Getriebeausgangswelle
- 9: Sonnenrad
- 10: Hohlrad
- 11: Planetenrad
- 12: Planetenachse
- 13.n: Oberflächen
- 14: Ringspalt
- 15: Planetenträger
- 16: Axialscheiben
- 17: Beschichtung
- 18: Schmierstoffverteilanordnung
- 19: Pumpe
- 20: Axialkanal
- 21: Radialkanal
- 22.1, 22.2: erste bzw. zweite Mündungen
- 23: Schmierstofftasche
- 24: Umfangsnut
- 25: Hülse
- 26: radialer Durchbruch
- 27.1, 27.2: erste bzw. zweite Mantelfläche
- 28: umlaufende Rinnen
- 29: Fortsetzung
- 30: Umfangsrand
- 31.1,31.2: Teilabschnitte

- 32: Umfangsfläche
- 33: Ringrand
- B: Axiale Breite
- B4: Ausdehnung in Umfangsrichtung
- D: Durchmesser
- L1: Erste axiale Länge
- LZ: Lastzone
- T1: Erste radiale Einsenktiefe (T1)
- T2: Zweite radiale Einsenktiefe (T2)
- X: Radialer Abstand

## Patentansprüche

1. Planetengetriebe einer Windkraftanlage
mit einem Hohlrad (10), einem Sonnenrad (9), mehreren Planetenrädern (11) und einem Planetenträger (15), auf dessen Planetenachsen (12) die Planetenräder (11) gleitgelagert angeordnet sind, indem die Planetenräder (11) koaxial zu den Planetenachsen (12) auf diesen angeordnet sind,
mit mindestens einer Schmierstofftasche (23) an einer Oberfläche (13.1; 13. 2) eines der beiden in Gleitkontakt stehenden Gleitpartner (11, 12), wobei sich jede Schmierstofftasche (23) axial und in Umfangsrichtung an der Oberfläche (13.1; 13. 2) des jeweiligen Gleitpartners (11; 12) ausdehnt und gegenüber der übrigen Mantelkontur dieses Gleitpartners (11; 12) radial vertieft ausgebildet ist, und
mit einer Schmierstoffverteilungseinrichtung (18; 20, 21), die von einer Pumpe (19) gespeist ist und die erste Mündungen (22.1) aufweist, wobei diese ersten Mündungen (22.1) in der oder den Schmierstofftaschen (23) enden,
wobei jede an einer Oberfläche (13.1; 13. 2) eines der beiden in Gleitkontakt stehenden Gleitpartner (11; 12) eine vorgesehene Schmierstofftasche (23) ist, deren axiale Länge (L) mindestens 60% der axialen Breite (B) des Planetenrads (11) beträgt,
wobei eine Umfangsnut (24; 31.1, 31.2) vorgesehen ist, die vollumfänglich in dem Gleitpartner (11; 12) verläuft, der koaxial zu dem mit zumindest einer solchen Schmierstofftasche (23) versehenen anderen Gleitpartner (12; 11) angeordnet ist, und/oder die sich in dem mit der zumindest einen Schmierstofftasche (23) versehenen Gleitpartner (11;12) an dessen Umfang ausschließlich zwischen der oder den Schmierstofftaschen (23) erstreckt, und
wobei die Schmierstoffverteilungseinrichtung (18) zweite Mündungen (22.2) umfasst, die entweder in oder gegenüber von Umfangsnuten (24; 31.1, 31.2) enden, **dadurch gekennzeichnet dass** die axiale Verbindung der jeweilige Schmierstofftasche (23) oder Schmierstofftaschen (23) mit der Umfangsnut (24, 30.1, 30.2) durchgehend mit einer gleichen zweiten radialen Einsenktiefe (T2) ausgebildet ist und dass die jeweilige Schmierstofftasche (23) an ihren axialen Enden Fortsetzungen (29) aufweist, die gegenüber der Ausdehnung dieser Schmierstofftasche (23) in Umfangsrichtung (B5) und einer ersten radialen Einsenktiefe (T1) zumindest in Umfangsrichtung eine reduzierte Ausdehnung (B4) haben.

2. Planetengetriebe einer Windkraftanlage nach Ansprüche 1
**dadurch gekennzeichnet,**
**dass** die axiale Symmetrieachse jeder Schmierstofftasche (23) zum Zentrum der Lastzone (LZ) der beiden im Gleitkontakt stehenden Gleitpartner (11, 12) einen Winkel α zwischen 90° und 120°einhält.

3. Planetengetriebe einer Windkraftanlage nach einem der Ansprüche 1 oder 2 **dadurch gekennzeichnet,**
**dass** eine Hülse (25) vorgesehen ist, deren erste Mantelfläche (27.1) entweder mit der Innenbohrung des Planetenrades (11) oder dem Außenumfang der Planetenachse (12) drehfest verbunden ist und die von radialen Durchbrüchen (26) durchzogen ist, und
**dass** deren zweite Mantelfläche (27.2) welche sich in radialem Abstand (X) zur ersten Mantelfläche (27.1) erstreckt, die Oberfläche (13.3) ist, die mit der Oberfläche (13.1; 13.2) des jeweils anderen Gleitpartners (11; 12) in Gleitkontakt steht.

4. Planetengetriebe einer Windkraftanlage nach Anspruch 3
**dadurch gekennzeichnet,**
**dass** die Schmierstoffverteilungseinrichtung (18) Radialkanäle (21) umfasst, die sich in einem der Gleitpartner (11; 12) erstrecken,
**dass** umlaufende Rinnen (28) vorgesehen sind, die entweder an der ersten Mantelfläche (27.1) der Hülse (25) oder einer Umfangsfläche (32) von Planetenrad (11) oder Planetenachse (12) liegt, mit der die Hülse (25) drehfest verbunden ist, und
**dass** die Radialkanäle (21), deren axiale Breite gegenüber der axialen Breite der umlaufenden Rinnen (28) geringer ist, in die jeweiligen Rinnen (28) münden.

5. Planetengetriebe einer Windkraftanlage nach einem der Ansprüche 1 bis 4 **dadurch gekennzeichnet,**
**dass** an den Planetenrädern (11) oder dem Planetenträger (15) Axialscheiben (16) vorgesehen sind, von denen jeweils ein Ringrand (33) mit einem axialen Gleitpartner (11; 15) in axialem Gleitkontakt steht.

6. Planetengetriebe einer Windkraftanlage nach einem der Ansprüche 1 bis 5 **dadurch gekennzeichnet,**
**dass** die Oberfläche (13.1, 13.2, 13.3) des einen Gleitpartners (11,12, 25) gegenüber der Oberfläche (13.1, 13.2, 13.3) des jeweils anderen Gleitpartners (11, 12, 25) eine größere Härte aufweist.

7. Planetengetriebe einer Windkraftanlage nach Anspruch 6
**dadurch gekennzeichnet,**
**dass** die geringe Härte der Oberfläche (13.1, 13.2, 13.3) des einen Gleitpartners (11, 12, 25) eine reine Stahlhärte ist und
**dass** die größere Härte der Oberfläche (13.1, 13.2, 13.3) des jeweils anderen Gleitpartners (11, 12, 25) von einer Beschichtung (17) aus Hartstoff gebildet ist.

## Claims

1. A planetary transmission of a wind turbine
comprising a ring gear (10), a sun gear (9), a plurality of planetary gears (11) and a planet carrier (15), on the planetary axles (12) of which the planetary gears (11) are slidably mounted, wherein the planetary gears (11) are coaxially arranged thereon relative to the planetary axles (12), comprising at least one lubricant pocket (23) on a surface (13.1; 13. 2) of one of the two sliding
partners (11, 12) in sliding contact, wherein each lubricant pocket (23) extends axially and in the circumferential direction on the surface (13.1; 13.2) of the respective sliding partner (11; 12) and is designed to be radially recessed relative to the remaining surface contour of said sliding partner (11; 12), and
comprising a lubricant distribution device (18; 20, 21), which is fed by a pump (19) and which has first openings (22.1), wherein these first openings (22.1) end in one or more lubricant pockets (23),
wherein each of which is a lubricant pocket (23) provided on a surface (13.1; 13.2) of one of the two sliding partners (11; 12) in sliding contact, the axial length (L) of which is at least 60% of the axial width (B) of the planetary gear (11),
wherein a circumferential groove (24; 31.1, 31.2) is provided which runs completely in the sliding partner (11; 12), which is arranged coaxially relative to the other sliding partner (12; 11) provided with at least one such lubricant pocket (23), and/or which extends in the sliding partner (11; 12) provided with at least one lubricant pocket (23) on the circumference thereof exclusively between the one or more lubricant pockets (23), and
wherein the lubricant distribution device (18) comprises second openings (22.2) which end either in or opposite circumferential grooves (24; 31.1, 31.2), **characterised in that** the axial connection of the respective one or more lubricant pockets (23) with the circumferential groove (24, 30.1, 30.2) is continuously formed with the same second radial depression depth (T2) and that the respective lubricant pocket (23) has extensions (29) at its axial ends which are opposite to the extension of said lubricant pocket (23) in the circumferential direction (B5), and a first radial depression depth (T1) has a reduced extension (B4) at least in the circumferential direction.

2. The planetary transmission of a wind turbine according to claim 1
**characterised in that**
the axial axis of symmetry of each lubricant pocket (23) maintains an angle α between 90° and 120° to the centre of the load zone (LZ) of the two sliding partners (11, 12) in sliding contact.

3. The planetary transmission of a wind turbine according to one of claims 1 or 2,
**characterised in that**
a sleeve (25) is provided, the first lateral surface (27.1) of which is connected in a rotationally fixed manner either to the inner bore of the planetary gear (11) or to the outer circumference of the planetary axle (12) and which is passed through by radial breakthroughs (26), and
that the second lateral surface (27.2) of which, which extends at a radial distance (X) relative to the first lateral surface (27.1), is the surface (13.3) which is in sliding contact with the surface (13.1; 13.2) of the other respective sliding partner (11; 12).

4. The planetary transmission of a wind turbine according to claim 3,
**characterised in that**
the lubricant distribution device (18) comprises radial channels (21) which extend into one of the sliding partners (11; 12),
circumferential grooves (28) are provided, which are located either on the first lateral surface (27.1) of the sleeve (25) or on a circumferential surface (32) of the planetary gear (11) or planetary axle (12), to which the sleeve (25) is connected in a rotationally fixed manner, and the radial channels (21), whose axial width is smaller than the axial width of the circumferential grooves (28), open into the respective grooves (28).

5. The planetary transmission of a wind turbine according to one of claims 1 to 4,
**characterised in that**
axial discs (16) are provided on the planetary gears (11) or the planet carrier (15), each of which has an annular edge (33) in axial sliding contact with an axial sliding partner (11; 15).

6. The planetary transmission of a wind turbine according to one of claims 1 to 5,
**characterised in that**
the surface (13.1, 13.2, 13.3) of one sliding partner (11, 12, 25) has a greater hardness than the surface (13.1, 13.2, 13.3) of the other respective sliding partner (11, 12, 25).

7. The planetary transmission of a wind turbine according to claim 6,
**characterised in that**
the low hardness of the surface (13.1, 13.2, 13.3) of one sliding partner (11, 12, 25) is pure steel hardness and
the greater hardness of the surface (13.1, 13.2, 13.3) of the other respective sliding partner (11, 12, 25) is formed by a coating (17) made of hard material.

## Revendications

1. Transmission planétaire d'une éolienne
comportant une couronne dentée (10), une roue solaire (9), plusieurs engrenages planétaires (11) et un porte-satellites (15), sur les axes planétaires (12) duquel les engrenages planétaires (11) sont montés sur palier lisse, les engrenages planétaires (11) étant agencés coaxiaux par rapport aux axes planétaires (12) sur ceux-ci,
comportant au moins une poche de lubrifiant (23) sur une surface (13.1 ; 13. 2) de l'un des deux partenaires de glissement (11, 12) se trouvant en contact de glissement, dans laquelle chaque poche de lubrifiant (23) s'étend axialement et dans la direction circonférentielle sur la surface (13.1 ; 13.2) du partenaire de glissement (11 ; 12) respectif et est réalisée radialement en retrait par rapport au reste du contour d'enveloppe de ce partenaire de glissement (11 ; 12), et
comportant un dispositif de distribution de lubrifiant (18 ; 20, 21), qui est alimenté par une pompe (19) et qui présente des premières embouchures (22.1), ces premières embouchures (22.1) se terminant dans la ou les poches de lubrifiant (23),
dans laquelle il est prévu respectivement sur une surface (13.1 ; 13. 2) de l'un des deux partenaires de glissement (11 ; 12) se trouvant en contact de glissement une poche de lubrifiant (23), dont la longueur axiale (L) représente au moins 60 % de la largeur axiale (B) de l'engrenage planétaire (11),
dans laquelle il est prévu une rainure circonférentielle (24 ; 31.1, 31.2) qui s'étend sur toute la circonférence dans le partenaire de glissement (11 ; 12), qui est agencé coaxialement à l'autre partenaire de glissement (12 ; 11) pourvu d'au moins une telle poche de lubrifiant (23), et/ou qui s'étend sur la circonférence du partenaire coulissant (11 ; 12) pourvu de l'au moins une poche de lubrifiant (23) exclusivement entre la ou les poches de lubrifiant (23), et
dans laquelle le dispositif de distribution de lubrifiant (18) comprend des secondes embouchures (22.2) qui se terminent soit dans des rainures circonférentielles (24 ; 31.1, 31.2) soit à l'opposé de celles-ci, **caractérisée en ce que** la liaison axiale de la poche de lubrifiant (23) respective ou des poches de lubrifiant (23) respectives avec la rainure circonférentielle (24, 30.1, 30.2) est formée en continu avec la même seconde profondeur de dépression radiale (T2) et **en ce que** la poche de lubrifiant (23) respective présente à ses extrémités axiales des extensions (29) qui présentent une étendue réduite (B4) au moins dans la direction circonférentielle par rapport à l'étendue de cette poche de lubrifiant (23) dans la direction circonférentielle (B5) et à une première profondeur de dépression radiale (T1).

2. Transmission planétaire d'une éolienne selon la revendication 1
**caractérisée en ce que**,
l'axe de symétrie axial de chaque poche de lubrifiant (23) maintient un angle α compris entre 90°et 120° par rapport au centre de la zone de charge (LZ) des deux partenaires de glissement (11, 12) se trouvant en contact de glissement.

3. Transmission planétaire d'une éolienne selon l'une des revendications 1 ou 2
**caractérisée en ce que**,
il est prévu un manchon (25) dont la première surface externe (27.1) est reliée en rotation soit à l'alésage intérieur de l'engrenage planétaire (11), soit à la circonférence extérieure de l'axe planétaire (12) et qui est traversé par des percées radiales (26), et
sa seconde surface externe (27.2), qui s'étend à une distance radiale (X) de la première surface externe (27.1), est la surface (13.3) qui est en contact de glissement avec la surface (13.1 ; 13.2) de l'autre partenaire de glissement (11 ; 12) respectif.

4. Transmission planétaire d'une éolienne selon la revendication 3
**caractérisée en ce que**,
le dispositif de distribution de lubrifiant (18) comprend des canaux radiaux (21) qui s'étendent dans l'un des partenaires de glissement (11 ; 12),
il est prévu des goulottes circonférentielles (28) qui se trouvent soit sur la première surface externe (27.1) du manchon (25), soit sur une surface périphérique (32) de l'engrenage planétaire (11) ou de l'axe planétaire (12), auxquelles le manchon (25) est relié en rotation, et **en ce que** les canaux radiaux (21), dont la largeur axiale est inférieure à la largeur axiale des goulottes circonférentielles (28), débouchent dans les goulottes (28) respectives.

5. Transmission planétaire d'une éolienne selon l'une des revendications 1 à 4
**caractérisée en ce que**,
sur les engrenages planétaires (11) ou sur le porte-satellites (15) sont prévus des disques axiaux (16), dont respectivement un bord annulaire (33) se trouve en contact de glissement axial avec un partenaire de glissement axial (11 ; 15).

6. Transmission planétaire d'une éolienne selon l'une des revendications 1 à 5
**caractérisée en ce que**,
la surface (13.1, 13.2, 13.3) d'un partenaire de glissement (11, 12, 25) présente une dureté supérieure à celle de la surface (13.1, 13.2, 13.3) de l'autre partenaire de glissement (11, 12, 25) respectif.

7. Transmission planétaire d'une éolienne selon la revendication 6
**caractérisée en ce que**,
la plus faible dureté de la surface (13.1, 13.2, 13.3) d'un partenaire de glissement (11, 12, 25) est une dureté d'acier pur et
**en ce que** la plus grande dureté de la surface (13.1, 13.2, 13.3) de l'autre partenaire de glissement (11, 12, 25) respectif est formée par un revêtement (17) en matériau dur.
